# FASCICULE DE BREVET EUROPEEN

(11) **EP 0 658 477 B1**
(45) Date de publication et mention de la délivrance du brevet: **06.08.1997**
(21) Numéro de dépôt: 94402847.1
(22) Date de dépôt: 09.12.1994
(51) Int. Cl.: B64D 11/06

(54) **Structure à plusieurs sièges adjacents convertible et à encombrement variable suivant un axe de coulissement**
Umwandelbare und in Raumbedarf bezüglich einer Verschiebungsachse veränderbare Vielfach-Sitz-Struktur
Convertible and with variable dimension along a sliding axis multiple seats structure

(30) Priorité: 17.12.1993 FR 9315256
(43) Date de publication de la demande: 21.06.1995
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Marechal, Robert René Lucien, F-75116 Paris (FR)
(74) Mandataire: Derambure, Christian

(56) Documents cités:
- EP-A- 0 322 930
- EP-A- 0 443 664
- EP-A- 0 530 920
- FR-A- 1 025 269
- FR-A- 1 128 852
- FR-A- 2 684 067
- US-A- 2 742 952

## Description

L'invention concerne une structure à plusieurs sièges adjacents convertible et à encombrement variable suivant un axe de coulissement.

L'invention concerne en particulier une telle structure destinée à des appareils de transports en commun, notamment d'avions de ligne.

Actuellement, les compagnies aériennes ont besoin de pouvoir adapter la cabine passager d'un même appareil en fonction du taux de remplissage dans les différentes classes de confort et de tarif.

Ainsi, entre deux vols consécutifs, les compagnies aériennes ont besoin de changer fréquemment par exemple des sièges de la classe touristes en sièges de classe "business" ou vice versa. Plusieurs méthodes et dispositifs leur sont actuellement proposés. La première méthode consiste à ôter entièrement les sièges et à les remplacer par des sièges de taille différente. De tels changements requièrent un temps excessif et ne peuvent généralement pas être réalisés par le personnel de bord. Ce type de changements est généralement effectué durant une maintenance de nuit par un personnel spécialisé.

Or, actuellement, les compagnies aériennes, dans un but d'améliorer la productivité, ont tendance à diminuer sensiblement les temps d'escale entre deux vols, le coût d'un avion au sol grévant sérieusement la productivité.

US-A-3 893 729 concerne une structure à plusieurs sièges adjacents qui sont convertibles dans différentes tailles de classes de confort. Cette structure comporte un piètement de support portant une pluralité de sièges adjacents. Chaque siège étant indépendant de l'autre. Le passage dans une classe de confort supérieur consiste à retirer certains sièges de la rangée (par exemple deux sièges sur un rang de huit), de faire glisser l'ensemble des sièges restants sur le piètement de support , et de rajouter à chacun d'eux un élément supplémentaire visant à élargir leur largeur. Les sièges retirés sont stockés dans le compartiment cargo de l'appareil. De tels dispositifs permettent des opérations de maintenance plus courtes et réalisables éventuellement par le personnel de bord. Il reste cependant la nécessité de transporter dans le compartiment cargo des sièges retirés, et des éléments complémentaires destinés à agrandir les sièges restants.

En outre, ce type de dispositif n'est que convertible et ne permet pas de diminuer l'encombrement général de la structure lorsque l'on passe de huit sièges adjacents à six sièges plus larges.

EP-A-0322 930, EP-A-0443 664, EP-A-0530 923 et EP-A-0530 920 concernent des structures à plusieurs sièges adjacents, pour des appareils de transport en commun, combinant la convertibilité et la réduction d'encombrement.

Ces structures comprennent une partie fixe comprenant au moins deux piétements transversaux, espacés l'un de l'autre, fixés au plancher de la cabine et reliés rigidement l'un à l'autre par des éléments longitudinaux de piétement d'axe général parallèle à un axe de coulissement. La structure comporte une partie mobile comprenant au moins un tube coaxial avec les éléments longitudinaux, coulissant à emboîtement de tube avec les éléments longitudinaux de piétement, et sur lesquels sont montés plusieurs bâtis rigides adjacents de sièges. La structure comporte en outre un mécanisme de blocage et de libération placé à une extrémité du premier bâti de siège. Le principe de fonctionnement est le suivant : par action sur le mécanisme de blocage et de libération, on permet le coulissement du tube ou des tubes dans les éléments longitudinaux de piétement et ainsi, on obtient une structure à encombrement variable par rapprochement/éloignement des bâtis de sièges adjacent. La fonction de convertibilité est réalisée par le sacrifice d'une place sur laquelle on ramène les deux accoudoirs de sorte que les deux sièges qui lui sont immédiatement adjacents aient une largeur supplémentaire.

Une telle structure repose sur un raccord coulissant à emboîtement de tube. Cet emboîtement de tube a pour inconvénient une maintenance difficile, notamment pour le nettoyage. En effet, l'accumulation de poussière peut amener au blocage du coulissement tube à tube.

Un autre inconvénient provient du fait que le coulissement s'effectue sur une partie substantielle de tube. En conséquence, la moindre déformation de l'un ou l'autre des tubes, notamment, à terme, sous le simple poids répété des divers occupants des fauteuils, tendra à rendre difficile le coulissement coaxial.

De plus, FR-A-1 128 852 montre une structure selon le préambule de la revendication 1 dans laquelle chaque élément de support longitudinal comprend deux éléments de coulisseau solidaires de ces élément longitudinaux et coulissant sur les éléments longitudinaux de piétement.

Le but de la présente invention est de proposer une structure à plusieurs sièges adjacents, du type convertible et à encombrement variable, palliant les inconvénients cités plus haut.

A cet effet, l'invention concerne une structure à plusieurs sièges adjacents d'appareils de transports en commun, notamment d'avions de ligne, convertible et à encombrement variable suivant un axe de coulissement, comportant une partie fixe comprenant au moins deux piétements transversaux, espacés l'un de l'autre, fixés au plancher de la cabine, et reliés rigidement l'un à l'autre par des éléments longitudinaux de piétement d'axe général parallèle à l'axe de coulissement ; au moins une partie mobile par coulissement par rapport à la partie fixe entre deux postions extrèmes, à savoir une première position dite position à encombrement minimal et une deuxième position dite à encombrement maximal, la dite partie mobile comprenant un chant transversal d'extrémité d'assise rigidement associé à des éléments de support, longitudinaux, et des chants transversaux intermédiaires de sièges parallèles au chant transversal d'extrémité d'assise et associés aux éléments de support longitudinaux permettant le montage des dossiers et des accoudoirs des sièges. La structure comporte en outre des moyens pour bloquer la partie mobile sur la partie fixe dans l'une ou l'autre des deux positions extrêmes.

Selon l'invention chaque élément longitudinal de piétement comprend au moins deux éléments de coulisseau solidaires de l'élément longitudinal de piétement, d'axe parallèle et distinct de l'axe général de l'élément de piètement longitudinal associé, dans lesquels coulisse et est guidé en translation suivant l'axe de coulissement un des éléments de support longitudinaux de la partie mobile. Une telle structure reposant sur un coulissement par coulisseau désaxé par rapport aux éléments longitudinaux de piétement permet de limiter sensiblement les zones de coulissement. Cela a pour effet d'une part de limiter l'encrassement des zones de coulissement, d'accéder plus facilement à ces zones de coulissement, de limiter les effets de blocage dus à la déformation des moyens de coulissement.

Un autre avantage de la présente invention repose sur le fait que la liaison coulisseau-élément longitudinal de piétement peut comprendre avantageusement un dispositif d'absorption de chocs, venant en complément ou en substitution de ceux existant déjà classiquement sur les piètements transversaux.

D'autres avantages résulteront de la description qui va suivre en référence aux dessins annexés dans lesquels :
la figure 1 est une représentation extérieure de trois-quart d'une structure à une partie mobile en position encombrement minimal selon la présente invention.
la figure 2 est une représentation extérieure de trois-quart d'une structure à deux parties mobiles en position encombrement minimal selon la présente invention.
la figure 3 est une représentation partielle en coupe longitudinale d'un mode de réalisation selon la présente invention.
la figure 4 est une représentation de face de la serrure axiale et une vue de face et en coupe partielle du dispositif manuel d'actionnement selon un mode de réalisation de l'invention.

L'invention concerne une structure 1 à plusieurs sièges adjacents d'appareils de transport en commun, notamment d'avions de ligne, convertible et à encombrement variable suivant un axe de coulissement 100. Les termes "transversal", "axial", "longitudinal" dans la suite de la description doivent être compris en rapport avec cet axe de coulissement 100.

La structure représentée sur les dessins et décrite dans la présente demande concerne une structure à trois sièges adjacents à encombrement variable.

Cette structure peut par exemple non limitatif permettre de transformer trois sièges de classe touristes en deux sièges de classe de confort supérieur avec réduction d'encombrement. Cette structure peut aussi bien être utilisée pour augmenter l'espace inter-siège afin de limiter la promiscuité des passagers.

Cette structure 1 comprend une partie fixe 2 et une partie mobile 3.

Dans la forme de réalisation représentée sur les figures, la partie fixe comprend au moins deux piétements transversaux 4, espacés l'un de l'autre, fixés au plancher de la cabine passager de l'appareil de transport en commun, et reliés rigidement l'un à l'autre par des éléments longitudinaux de piétement 5 d'axe général parallèle à l'axe de coulissement 100.

Chaque élément longitudinal de piètement comprend au moins deux éléments de coulisseau 9 solidaires de l'élément longitudinal 5 de piétement, d'axe parallèle et distinct de l'axe général de l'élément de piétement longitudinal 5 qui lui est associé.

Dans ces éléments de coulisseau 9, coulisse et est guidé en translation suivant l'axe de coulissement 100, un élément de support longitudinal 7 constitutif de la partie mobile 3.

La (les) partie(s) mobile(s) 3 comprennent en outre un chant transversal 6 d'extrémité d'assise rigidement associé aux éléments longitudinaux 7, et des chants transversaux intermédiaires de siège 8 parallèles au chant transversal d'extrémité d'assise 6 et associés aux éléments de supports longitudinaux 7.

Les chants transversaux d'extrémité d'assise 6 et les chants transversaux intermédiaires de siège 8 sont disposés afin de permettre le montage des dossiers et des accoudoirs des sièges.

Selon l'invention, les chants transversaux intermédiaires de siège 8 sont coulissants par rapport aux éléments de support 7 auxquels ils sont associés.

Cette caractéristique de l'invention est importante dans la mesure où elle permet de compresser ou de dilater le bâti de chaque siège ce qui n'est pas possible dans l'art antérieur car les éléments du bâti des sièges sont tous solidarisés entre eux en translation selon l'axe de coulissement.

Avantageusement, les éléments de support 7 comprennent des butées d'entraînement (non représentées) disposées à des endroits pré-déterminés, pour entraîner en translation selon l'axe de coulissement 100 les chants transversaux intermédiaires 8 de siège sur une distance préalablement choisie, éventuellement différente de la translation du ou des chants transversaux 6 d'extrémité d'assise.

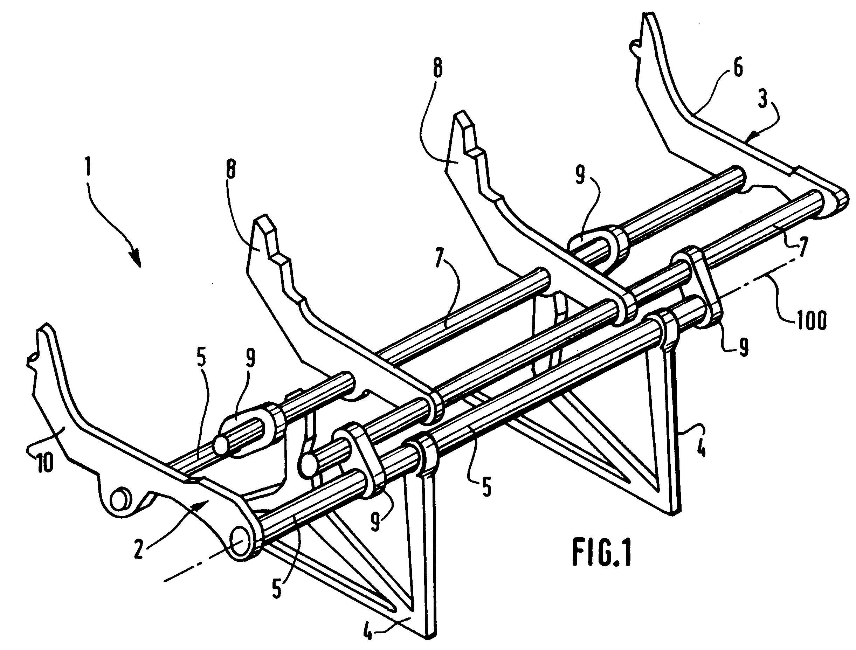

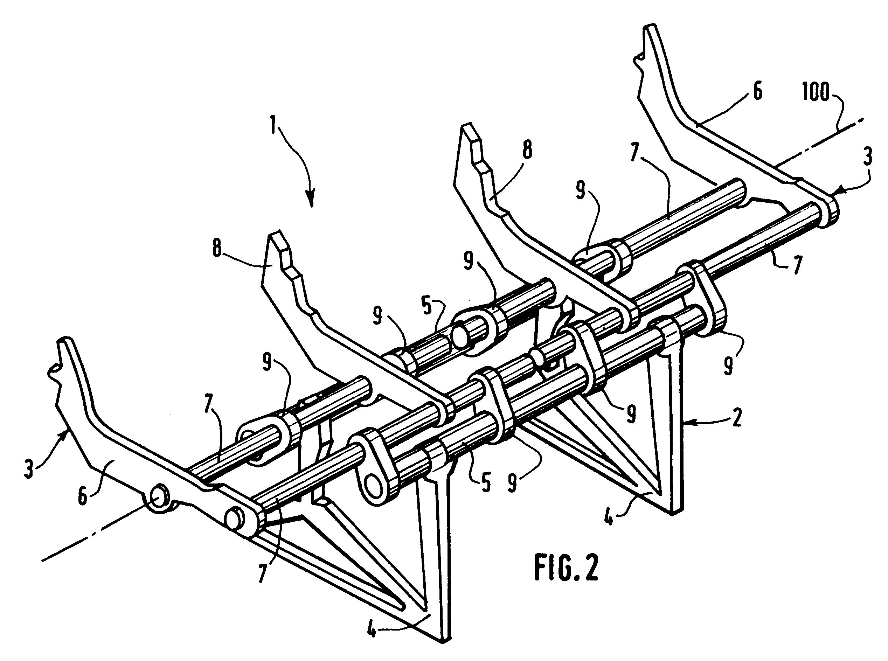

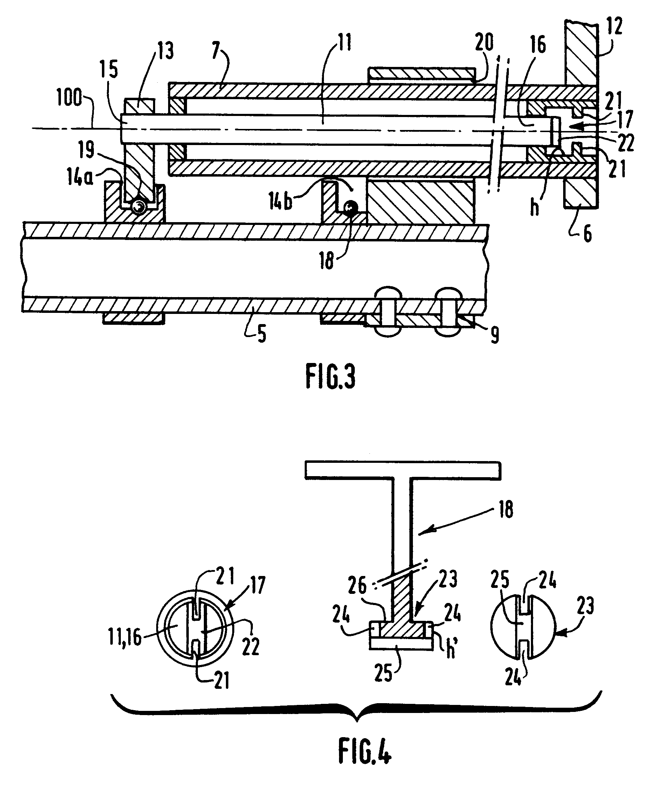

Dans un premier mode de réalisation de l'invention représenté figure 1, l'un des chants transversaux 6 d'extrémité d'assise 10 est rigidement associé aux éléments longitudinaux de piétement 5, seule une extrémité d'assise 6 étant mobile. Cette configuration est particulièrement avantageuse lorsque la structure est disposée à proximité d'une paroi de la cabine passagers de l'appareil de transport en commun.

Dans un deuxième mode de réalisation représenté sur la figure 2, les deux chants transversaux 6 d'extrémité d'assise sont associés rigidement à deux parties mobiles 3 différentes. Dans cette configuration, les deux extrémités d'assise 6 sont mobiles indépendamment l'une de l'autre.

Les ou la parties mobiles 3 coulissent par rapport à la partie fixe 2 selon l'axe de coulissement 100 entre deux positions extrêmes, à savoir, une première position dite position à encombrement maximal et une deuxième position dite à encombrement minimal (figure 1 et 2).

Selon l'invention, la structure comprend des moyens pour bloquer la ou les parties mobiles 3 sur la partie fixe 2 dans l'une ou l'autre des deux postions extrêmes.

Avantageusement, les moyens de blocage comprennent des moyens de butées (non représentés) pour limiter le mouvement de coulissement entre les deux positions extrêmes et des moyens de sécurité pour bloquer la partie mobile 3 dans l'une ou l'autre des deux positions extrêmes.

Selon l'invention, le passage de l'une à l'autre des positions extrêmes s'effectue à l'aide d'un dispositif manuel 18 d'actionnement amovible sécurisé. La sécurité consiste en ce que le dispositif manuel 18 d'actionnement est inamovible de la structure tant que le blocage de la translation n'est pas effectif.

Selon le mode de réalisation représenté sur la figure 3, les moyens de sécurité pour bloquer la partie mobile dans l'une des positions extrêmes sont en partie disposés à l'intérieur d'un des éléments de support 7 longitudinaux. A cet effet, l'élément de support longitudinal 7 est creux.

Outre l'élément de support longitudinal 7 creux, les moyens de sécurité pour bloquer la partie mobile 3 dans l'une des deux postions extrêmes comprennent une tige 11 montée coaxialement dans l'élément de support longitudinal 7 creux, libre en rotation autour de l'axe dudit élément de support creux, débouchant à l'une de ses extrémités sur la face externe 12 du chant transversal 6 d'extrémité d'assise mobile, et présentant à son autre extrémité une came 13. La came 13 est destinée à coopérer avec deux gorges 14a, 14b radiales réalisées sur l'élément de piétement 5 associé à l'élément de support longitudinal 7 creux par l'intermédiaire des coulisseaux 9. Les gorges 14a, 14b sont disposées de telle sorte que dans la première position, la came coopère avec la première gorge 14b pour bloquer la partie mobile 3 en translation, et dans la deuxième position, la came coopère avec la deuxième gorge 14a en vue du même résultat.

Avantageusement, les moyens de sécurité pour bloquer la partie mobile 3 dans une des deux positions extrêmes comprend un système d'ajustement 18, 19 dans la gorge 14a, 14b comme, par exemple non limitatif, un système à bille 18 coopérant avec une cavité 19. La bille 18 ou la cavité 19 étant disposée indifféremment sur l'extrémité de la came 13 ou le fond de la gorge 14a, 14b.

En outre, la tige 11 peut être associée à un élément élastique la forçant à ramener la came 13 dans une position came engagée.

Enfin, l'extrémité 16 débouchant sur la face externe 12 du chant transversal 6 d'extrémité d'assise peut avantageusement présenter une serrure axiale 17 de sécurité destinée à coopérer avec le dispositif manuel 18 d'actionnement amovible, permettant d'imprimer le mouvement de rotation à la tige 11 en vue du passage d'une position vers une autre.

Selon de mode de réalisation représenté sur la figure 4, la serrure axiale 17 de sécurité et le dispositif d'actionnement manuel 18 coopèrent l'un avec l'autre de telle manière que :
- si la came est initialement mal positionnée dans la gorge, le dispositif d'actionnement manuel ne pourra être associé à la serrure axiale.
- si la came est initialement bien positionnée dans l'une des gorges, le dispositif manuel d'actionnement pourra être introduit dans la serrure axiale, et ne pourra en être retiré que si la came est correctement positionnée dans l'une ou l'autre des gorges.

Pour cela la serrure axiale 17 comprend des ergots 21 radiaux solidaires du chant transversal 6 d'extrémité d'assise et à l'extrémité 16 de la tige 11 une saillie 22 diamétrale ; et le dispositif d'actionnement comprend à une première extrémité 23 deux rainures radiales 24 de hauteur h' inférieure ou égale à la profondeur de la serrure axiale, et une rainure diamétrale 25 destinée à coopérer avec la saillie diamétrale 22

Le principe est le suivant :
en position non correcte de la came dans une gorge, les rainures radiales 24 ne sont pas en regard des saillies 21, la face 26 du dispositif est bloquée par les saillies 21 empêchant le retrait du dispositif.

Ainsi, le passage de l'une à l'autre des postions est le suivant :
introduction du dispositif manuel d'actionnement dans la serrure axiale ; de ce fait, solidarisation en rotation du dispositif d'actionnement manuel et de la tige.
rotation de la tige grâce au dispositif manuel d'actionnement dégageant la came d'une des gorges.
coulissement de la partie mobile vers l'autre position ;
rotation inverse de la tige pour engager la canne dans l'autre gorge ;
retrait du dispositif manuel d'actionnement de la serrure axiale de sécurité si la canne est correctement engagée dans la gorge.

Avantageusement, la liaison rigide liant les coulisseaux 9 aux éléments longitudinaux de piétement 5 pourrait comporter un dispositif d'absorption d'énergie venant compléter ou remplacer les dispositifs d'absorption d'énergie classiquement disposés sur les piétements transversaux 4.

## Revendications

1. Structure à plusieurs sièges adjacents d'appareil de transport en commun, notamment d'avion de ligne, convertible et à encombrement variable suivant un axe de coulissement (100), comprenant :
- une partie fixe (2) comprenant au moins deux piétements transversaux (4), espacés l'un de l'autre, fixés au plancher de la cabine passager et reliés rigidement l'un à l'autre par des éléments longitudinaux (5) de piétement d'axe général parallèle à l'axe de coulissement ;
- au moins une partie mobile (3) par rapport à la partie fixe entre deux positions extrêmes, à savoir une première position, à encombrement maximal, et une deuxième position, à encombrement minimal, ladite partie mobile (3) comprenant un chant transversal (6) d'extrémité d'assise rigidement associé à des éléments de support longitudinaux (7), et des chants transversaux intermédiaires (8) de siège parallèles au chant transversal (6) d'extrémité d'assise et associés aux éléments de support longitudinaux (7), permettant le montage des dossiers et des accoudoirs des sièges ; et
- des moyens de bloquer la partie mobile (3) sur la partie fixe (2) dans l'une ou l'autre des deux positions extrêmes,
caractérisée en ce que chaque élément longitudinal (5) de piétement comprend au moins deux éléments de coulisseau (9) solidaires de l'élément longitudinal (5) de piétement, d'axe parallèle et distinct de l'axe général de l'élément de piétement (5) longitudinal associé, dans lesquels coulisse et est guidé en translation suivant l'axe de coulissement (100) un des éléments de support longitudinaux (7) de la partie mobile (3).

2. Structure selon la revendication 1 caractérisée en ce que les chants transversaux intermédiaires (8) de siège sont coulissants par rapport aux éléments de support (7) auxquels ils sont associés.

3. Structure selon la revendication 2 caractérisée en ce que les éléments de support (7) comprennent des butées d'entraînement disposées à des endroits prédéterminés, pour entraîner en translation selon l'axe de coulissement (100) lesdits chants transversaux intermédiaires (8) de siège sur une distance préalablement choisie qui peut être différente de la distance de déplacement de la partie mobile (3).

4. Structure selon l'une quelconque des revendications 1 à 3 caractérisée en ce que les moyens de blocage comprennent des moyens de buté pour limiter le mouvement de coulissement entre les deux positions extrêmes et des moyens de sécurité pour bloquer la partie mobile (3) dans une des deux positions extrêmes.

5. Structure selon l'une quelconque des revendications 1 à 4 caractérisée en ce que l'un des chants transversaux (10) d'extrémité d'assise est associé rigidement aux éléments longitudinaux (5) de piétement, seule une extrémité d'assise (6) étant mobile.

6. Structure selon l'une quelconque des revendications 1 à 4 caractérisée en ce que chacun des chants transversaux (6) d'extrémité d'assise est associé rigidement à une partie mobile (3), les deux extrémités d'assise (10) étant mobiles indépendamment l'une de l'autre.

7. Structure selon l'une quelconque des revendications 1 à 6 caractérisée en ce que les moyens de sécurité pour bloquer la partie mobile (3) dans l'une ou l'autre des positions extrêmes comprennent un dispositif manuel d'actionnement sécurisé inamovible de la structure tant que le blocage de la translation n'est pas correctement réalisé.

8. Structure selon l'une quelconque des revendications 1 à 7 caractérisée en ce que l'un au moins des éléments de support longitudinaux (7) de chaque partie mobile (3) est creux et en ce que les moyens de sécurité comprennent une tige (11) montée coaxialement dans l'élément de support (7) creux, libre en rotation autour de l'axe dudit élément de support, débouchant à l'une de ses extrémités (16) sur la face externe (12) du chant transversal (6) d'extrémité d'assise mobile, et présentant à son autre extrémité (15) une came (13), et deux gorges (14a, 14b) réalisées sur l'élément de piétement (5) associé, de sorte que dans la première position, la came (13) coopère avec la première gorge (14b) pour bloquer la partie mobile (3) en translation, et dans la deuxième position, la came coopère avec la deuxième gorge (14a), le passage de l'une à l'autre des positions étant réalisé d'une part par rotation de la tige (11) dégageant la came d'une des gorges (14a, 14b) ; coulissement de la partie mobile (3) vers l'autre position ; rotation inverse de la tige (11) pour engager la came (13) dans l'autre gorge (14a, 14b).

9. Structure selon la revendication 8 caractérisée en que l'extrémité (16) débouchant sur la face externe (12) du chant transversal (6) d'extrémité d'assise présente une serrure axiale de sécurité (17) destinée à coopérer avec le dispositif d'actionnement manuel amovible (18), permettant d'imprimer le mouvement de rotation à la tige (11) en vu du passage d'une position vers l'autre, et inamovible tant que la came (13) n'est pas correctement positionnée dans l'une ou l'autre des gorges (14a, 14b).

10. Structure selon l'une des revendications 8 ou 9 caractérisée en ce que la came (13) est justement positionnée dans l'une ou l'autre des gorges (14a, 14b) grâce à un système à bille (18) coopérant avec une cavité (19), indifféremment disposés dans le fond de la gorge ou à l'extrémité radiale de la came.

11. Structure selon l'une des revendications 1 à 10 caractérisée en ce que les coulisseaux (9) sont équipés de douilles à bille (20).

12. Structure selon l'une quelconque des revendications 8 à 11 caractérisée en ce qu'un élément élastique force la tige (11) dans une position came ramenant la came (13) en position engagée dans l'une ou l'autre des gorges (14a, 14b).

13. Structure selon l'une quelconque des revendications 1 à 12 caractérisée en ce que les liaisons rigides entre les coulisseaux (9) et les éléments longitudinaux (5) de piétement, ont des liaisons absorbeuses d'énergie en cas d'accélération importante dûe à une collision accidentelle de l'appareillage de transport en commun.

## Claims

1. A structure comprising a plurality of adjacent seats for a public passenger vehicle, in particular an airliner, the structure being convertible and of variable size along a sliding axis (100), and comprising:
a fixed portion (2) comprising at least two transverse underframes (4) that are spaced apart from each other, fixed to the floor of the passenger cabin, and rigidly connected to one another by longitudinal underframe elements (5) having an axis that is generally parallel to the sliding axis;
at least one moving portion (3) that is movable relative to the fixed portion between two extreme positions, namely a maximum-size first position and a minimum-size second position, said moving portion (3) including an end transverse seat side member (6) rigidly associated with longitudinal support elements (7), and intermediate transverse seat side members (8) parallel to the end transverse seat side member (6) and associated with the longitudinal support elements (6), and serving to mount seat backs and arms; and
locking means for locking the moving portion (3) to the fixed portion (2) in each of the two extreme positions;
the structure being characterized in that each longitudinal underframe element (5) includes at least two sliding support elements (9) secured to the longitudinal underframe element (5) for sliding along an axis that is parallel to and distinct from the general axis of the associated longitudinal underframe element (5), with one of the longitudinal support elements (7) of the moving portion (3) being slidably received therein and guided in translation along the sliding axis (100).

2. A structure according to claim 1, characterized in that the intermediate transverse seat side members (8) are slidable relative to the support elements (7) with which they are associated.

3. A structure according to claim 2, characterized in that the support elements (7) include driving abutments disposed at predetermined locations for driving said intermediate transverse seat side members (8) in translation along the sliding axis (100) over a previously-chosen distance that is not necessarily the same as the displacement distance of the moving portion (3).

4. A structure according to any one of claims 1 to 3, characterized in that the locking means comprising abutment means for limiting sliding motion between the two extreme positions, and safety means for locking the moving portion (3) in each of the two extreme positions.

5. A structure according to any one of claims 1 to 4, characterized in that one of the end transverse seat side members (10) is rigidly associated with the longitudinal underframe elements (5) so that only one of the seat ends (6) is movable.

6. A structure according to any one of claims 1 to 4, characterized in that each of the end transverse seat side members (6) is rigidly associated with a moving portion (3), each of the two seat ends (10) being movable independently of the other.

7. A structure according to any one of claims 1 to 6, characterized in that the safety means for locking the moving portion (3) in either extreme position comprise a manual actuator device that is made safe by being retained by the structure unless it has been properly locked in position against translation.

8. A structure according to any one of claims 1 to 7, characterized in that at least one of the longitudinal support elements (7) of each moving portion (3) is hollow, and in that the safety means comprise a rod (11) coaxially mounted inside the hollow support element (7), free to rotate about the axis of said support, opening out to one of its ends (16) in the outside face (12) of the end transverse seat side member (6), and having a cam (13) at its other end (15), two grooves (14a, 14b) being provided in the associated underframe element (5) in such a manner that when the cam (13) is in the first position it co-operates with the first groove (14b) to lock the moving portion (3) in translation, and when the cam is in its second position it co-operates with the second groove (14a), changeover between the two positions being achieved firstly by rotating the rod (11) so as to disengage the cam from one of the grooves (14a, 14b); then by sliding the moving portion (3) towards the other position; and then by rotating the rod (11) in the opposite direction to engage the cam (13) in the other groove (14a, 14b).

9. A structure according to claim 8, characterized in that the end (16) opening out in the outside face (12) of the end transverse seat side member (6) has an axial safety lock (17) designed to co-operate with the removable manual actuator device (18) that enables rotary motion to be imparted to the rod (11) in order to pass from one position to the other, which device is prevented from being removed so long as the cam (13) is not correctly positioned in one or other of the grooves (14a, 14b).

10. A structure according to claim 8 or 9, characterized in that the cam (13) is properly positioned in one or other of the grooves (14a, 14b) by means of a system comprising a ball (18) that co-operates with a cavity (19), one of the ball and cavity being disposed in the bottom of the groove and the other at the radial end of the cam.

11. A structure according to any one of claims 1 to 10, characterized in that the sliding supports (9) are fitted with ball-bearing sockets (20).

12. A structure according to any one of claims 8 to 11, characterized in that a resilient member urges the rod (11) into a cam position that causes the cam (13) to be engaged in one or other of the grooves (14a, 14b).

13. A structure according to any one of claims 1 to 12, characterized in that the rigid connections between the sliding supports (9) and the longitudinal underframe elements (5) are constituted by links that absorb energy in the event of major acceleration due to an accidental collision of the public passenger vehicle.

## Patentansprüche

1. Rahmengestell für mehrere nebeneinander befindliche, auf einer Verschiebungsachse (100) verstellbare und dementsprechend mehr oder weniger Platz bedürfende Sitze für öffentliche Verkehrsmittel und insbesondere für Verkehrsflugzeuge mit
- einem festen Teil (2) mit mindestens zwei quer angebrachten Untergestellteilen (4), die in einem bestimmten Abstand voneinander am Boden des Passagierraums befestigt sowie durch längsgerichtete Untergestellteile (5), deren Hauptachse parallel zur Verschiebungsachse liegt, starr miteinander verbunden sind,
- mindestens einem durch Verschieben gegenüber dem festen Teil zwischen zwei Endstellungen - nämlich einer ersten Stellung mit minimalem Platzbedarf und einer zweiten Stellung mit maximalem Platzbedarf - beweglichen Teil (3), der ein Hochkantteil (6) am Ende der Auflage besitzt, der starr mit längsgerichteten Traggestellteilen (7) und ebenfalls quergerichteten, hochkantigen Zwischenteilen (8) zwischen den einzelnen Sitzen verbunden ist, die parallel zum quergerichteten Hochkantteil (6) am Ende der Auflage angeordnet und mit den längsgerichteten Traggestellteilen (7) verbunden sind, wobei die hochkantigen Zwischenteile (8) zum Anbringen der Rück- und Armlehnen an den Sitzen dienen, sowie
- Mittel zum Verriegeln des beweglichen Teils (3) mit dem festen Teil (2) in einer der beiden Endstellungen,
dadurch gekennzeichnet, daß jedes längsgerichtete Untergestellteil (5) mindestens zwei verschiebbare Gleitstücke (9) besitzt, die fest mit den entsprechenden längsgerichteten Untergestellteilen (5) verbunden, jedoch achsparallel und nicht achsgleich zur Hauptachse des entsprechenden längsgerichteten Untergestellteils (5) ausgerichtet sind, in denen jeweils ein dern längsgerichteten Traggestellteil (7) des beweglichen Teils (3) so geführt wird, daß es eine Parallelverschiebung auf der Verschiebungsachse (100) ausführt.

2. Rahmengestell nach Patentanspruch 1, dadurch gekennzeichnet, daß die quergerichteten hochkantigen Zwischenteile (8) auf den entsprechenden längsgerichteten Traggestellteilen (7) verschoben werden können.

3. Rahmengestell nach Patentanspruch 2, dadurch gekennzeichnet, daß die Traggestellteile (7) an bestimmten Stellen angeordnete Mitnehmer besitzen, um die quergerichteten hochkantigen Zwischenteile (8) über einen festgelegten Abstand auf der Verschiebungsachse (100) in der Parallelverschiebung mitzunehmen, wobei dieser Anstand ggf. von der Verschiebungsstrecke des beweglichen Teils (3) abweichen kann.

4. Rahmengestell nach einem der Patentansprüche 1 bis 3, dadurch gekennzeichnet, daß die Verriegelungsmittel Anschläge zur Begrenzung der Verschiebung zwischen den beiden Endstellungen sowie Sicherungsmittel zum Blockieren der beweglichen Teile (3) in jeder der beiden Endstellungen besitzen.

5. Rahmengestell nach einem der Patentansprüche 1 bis 4, dadurch gekennzeichnet, daß je ein quergerichtetes Hochkantteil (10) am Ende der Auflage starr mit der längsgerichteten Untergestellteilen (5) verbunden, wobei jedoch nur eine Auflage (6) verschiebbar ist.

6. Rahmengestell nach einem der Patentansprüche 1 bis 4, dadurch gekennzeichnet, daß beide quergerichteten Hochkantteile (6) am Ende der Auflage starr mit zwei unterschiedlichen beweglichen Teilen (3) verbunden sind, wobei jedes der beiden quergerichteten Hochkantteile (10) am Ende der Auflage unabhängig vom anderen verschiebbar ist.

7. Rahmengestell nach einem der Patentansprüche 1 bis 6, dadurch gekennzeichnet, daß die Sicherheitsmittel zum Verriegeln des beweglichen Teils (3) in einer der beiden Endstellungen eine Handbetätigungsvorrichtung besitzen, die erst dann vom Rahmengestell abgenommen werden kann, wenn die Blockierung der Parallelverschiebung wirksam ist.

8. Rahmengestell nach einem der Patentansprüche 1 bis 7, dadurch gekennzeichnet, daß mindestens eines der längsgerichteten Traggestellteile (7) des beweglichen Teils (3) hohl ausgeführt ist und die Sicherungsmittel zum Verriegeln des beweglichen Teils in einer der beiden Endstellungen einen Stab (11) beinhalten, der koaxial in dem hohlen längsgerichteten Traggestellteil (7) angebracht ist, daS er sich frei um dessen Achse drehen kann, und der mit einem seiner beiden Enden (16) an der Außenfläche (12) des quergerichteten Hochkantteils (6) am Ende der beweglichen Auflage anliegt und an seinem anderen Ende (15) eine Nocke (13), und zwei Hohlkehlen (14a, 14b), aufweist die auf dem entsprechenden Untergestellteil (5) angebracht sind, sodaß die Nocke (13) in der einen Stellung mit der einen Hohlkehle (14b) zusammenwirkt, wodurch der bewegliche Teil (3) in der Parallelverschiebung blockiert wird, und in der anderen Stellung mit der zweiten Hohlkehle (14a) zusammenwirkt, wobei der Übergang von der einen Stellung in die andere durch Drehung des Stabes (11) zum Herausnehmen der Nocke aus einer der Hohlkehlen (14a, 14b), Verschieben des beweglichen Teils (3) in die andere Endstellung, Drehung des Stabes (11) in der umgekehrten Drehrichtung zum Einführen der Nocke (13) in die andere Hohlkehle (14a, 14b) erfolgt.

9. Rahmengestell nach Patentanspruch 8, dadurch gekennzeichnet, daß das Ende (16) an der Außenfläche (12) des quergerichteten Hochkantteils (6) am Ende der beweglichen Auflage anliegt und eine axiale Sicherheitsverriegelung (17) aufweist, die so mit der abnehmbaren Handbetätigungsvorrichtung (18) zusammenwirkt, daß der Stab (11) in eine Drehbewegung versetzt wird, um von einer Stellung in die andere zu gelangen und die Handbetätigungsvorrichtung (18) erst wieder abgenommen werden kann, wenn die Nocke (13) richtig in einer der beiden Hohlkehlen (14a, 14b) positioniert ist.

10. Rahmengestell nach Patentanspruch 8 oder 9, dadurch gekennzeichnet, daß die Nocke (13) einwandfrei in einer der beiden Hohlkehlen (14a, 14b) mit Hilfe einer Vorrichtung mit einer Kugel (18), die mit einer Vertiefung (19) zusammenwirkt, positioniert ist, wobei diese beiden Teile beliebig am Ende der Nocke oder am Boden der Hohlkehle angeordnet sein können.

11. Rahmengestell nach einem der Patentansprüche 1 bis 10, dadurch gekennzeichnet, daß die Gleitstücke (9) mit Kugellagern (20) versehen sind.

12. Rahmengestell nach einem der Patentansprüche 8 bis 11, dadurch gekennzeichnet, daß ein elastischen Teil den Stab (11) in eine nockeposition nimmt, so daß die Nocke (13) in der Hohlkehle (14a, 14b) festgehalten wird.

13. Rahmengestell nach einem der Patentansprüche 1 bis 12, dadurch gekennzeichnet, daß die starre Verbindungen zwischen den Gleitstücken (9) und den längsgerichteten Untergestellteilen (5) energieabsorbierenden Verbindungen sind für den Fall einer starken Beschleunigung bei einem Kollisionsunfall des Verkehrsflugzeugs gestaltet wird.
